# EUROPEAN PATENT SPECIFICATION

(11) **EP 3 417 097 B1**
(45) Date of publication and mention of the grant of the patent: **07.04.2021**
(21) Application number: 16706727.1
(22) Date of filing: 16.02.2016
(51) Int. Cl.: C25D 3/44, C25D 9/08

(54) **ELECTROCHEMICAL DEPOSITION OF ELEMENTS IN AQUEOUS MEDIA**
ELEKTROCHEMISCHE ABSCHEIDUNG VON ELEMENTEN IN WÄSSRIGEN MEDIEN
DÉPÔT ÉLECTROCHIMIQUE D'ÉLÉMENTS EN MILIEU AQUEUX

(43) Date of publication of application: 26.12.2018
(73) Proprietor: LumiShield Technologies Incorporated, Pittsburgh, PA 15205 (US)
(72) Inventor: NULWALA, Hunaid, Pittsburgh, PA 15241 (US); WATKINS, John, D., Pittsburgh, PA 15243 (US); ZHOU, Xu, Pittsburgh, PA 15237 (US)
(74) Representative: Murgitroyd & Company
(86) International application number: PCT/US2016/018050
(87) International publication number: WO 2017/142513

(56) References cited:
- EP-A2- 1 300 488
- WO-A1-2015/125737
- WO-A1-2016/004189
- WO-A2-2015/007983
- FR-A- 529 229
- US-A1- 2004 191 545

## Description

### BACKGROUND

Electrodeposition of metals, including aluminum, at ambient temperatures has been widely investigated owing to a variety of potential applications that include uses in corrosion-resistant applications, decorative coatings, performance coatings, surface aluminum alloys, electro-refining processes, and aluminum-ion batteries. Due to the large reduction potential of some metals, these materials have been exclusively used in non-aqueous media. For example, baths that have been developed for aluminum electrodeposition fall into three categories. These categories are inorganic molten salts, ionic liquids, and molecular organic solvents. Inorganic molten salt baths require a relatively high temperature (e.g., >140°C). And in some instances, such baths are prone to the volatilization of corrosive gases. For example, AlCl₃-NaCl-KCl baths suffer from the volatilization of corrosive AlCl₃ gas. In addition, baths that have been developed for aluminum electrodeposition have high energy consumption and material limitations of the substrate and apparatus.

Ionic liquid and organic solvent baths both allow electrodeposition of a metal, such as aluminum, at lower temperatures. For example, aluminum plating from room temperature ionic liquids has been the subject of a number of studies over the past few years. Still, an industrial process for aluminum electrodeposition from ionic liquids does not been realized, even though a manufacturing pilot plant was developed by Nisshin Steel Co., Ltd. The plant was not considered economically viable due to cost associated with materials and the need to perform plating in an inert atmosphere, free of humidity.

US 2004/191545 refers to a plasma resistant component capable of being exposed to a plasma in a process chamber having a structure having an electroplated coating comprising yttrium-containing species. The electroplated coating is said to be resistant to corrosion in the plasma, and can have a compositional gradient of yttrium-containing species through a thickness of the coating. The coating can be formed by electroplating a layer comprising yttrium onto the surface, and then electroplating a second layer onto the first layer, and annealing the first and second layers. The second layer can comprise aluminum or zirconium. In another embodiment, the coating is said to be formed by electroplating a layer comprising a mixture of aluminum and yttrium onto the surface and annealing the layer. WO2015/125737 refers to a composition for direct-current cathodic electrolysis which it includes at least one metal ion selected from the group consisting of typical metal ions (excluding zinc ion) having a valency of at least 2 and rare-earth-element ions, or a complex thereof; and an organic acid. The composition is said to be capable of forming a lubrication-film-equipped metal material exhibiting excellent lubrication properties and excellent chemical conversion properties after degreasing. FR 529229 refers to a process allowing a wire or other object made of copper to be covered with a layer of aluminum, i.e. the thickness of this layer being variable depending on the applications that must be received the wire the covered object ,and - can reach 7 millimeters. WO 2016/004189 refers to an electrolyte composition comprising aluminum and a lower molecular weight fluorinated organic anion which can be an ionic liquid. The fluorinated organic anion can be bis(trifluorosulfonyl)imide. The composition can be used in electroplating or batteries.

Commercial aluminum electroplating processes from organic solvents has been deployed with limited success. As of now, only two processes, namely, the Siemens Galvano Aluminium (SIGAL) process and Room-temperature Electroplated Aluminium (REAL) process have been deployed. The SIGAL process is currently licensed to AlumiPlate, Inc. and yields high quality aluminum. However, organoaluminum processes are self-ignitable and extremely sensitive to atmospheric water.

### SUMMARY

The present invention provides a method for the electrodeposition of aluminum as defined in the appended claims. Disclosed herein is a method for the electrodeposition of aluminumonto a surface of a conductive substrate. The electrodeposition is performed at a temperature from about 10°C to about 70°C and, in some instances, at a pressure of about 0.5 atm to about 5 atm, in an atmosphere comprising oxygen. The method of the various embodiments described herein comprises electrodepositing the aluminum via electrochemical reduction of a metal complex dissolved in a substantially aqueous medium.

### DESCRIPTION OF THE FIGURES

The drawings illustrate generally, by way of example, but not by way of limitation, various embodiments discussed in the present document.

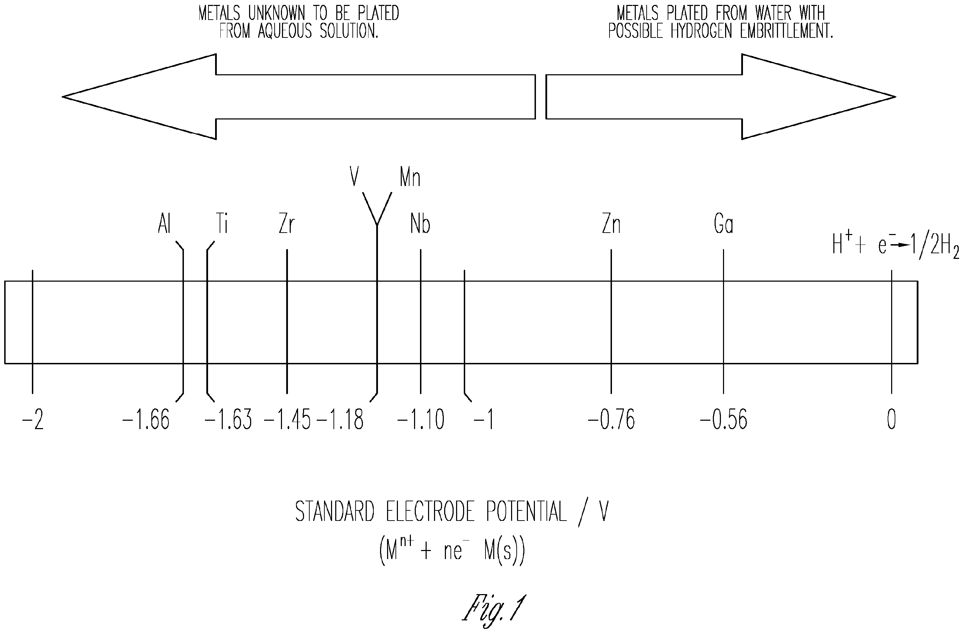

FIG. 1 is a plot of a series for metal reductions versus that of proton reduction.
FIG. 2 is cyclic voltammograms for aluminum complexes at 1 M concentration in water (i) Al(Tf₂N)₃; and (ii) AlCl₃ on a 3 mm glassy carbon working electrode vs. a Ag/AgCl (3M NaCI) reference electrode and an aluminum counter electrode and a 50 mVs⁻¹ scan rate.
FIG. 3 is cyclic voltammograms for aluminum complexes in water (i) 6 M p-TSA; (ii) 0.5 M Al(p-TSA)₆ (pH 0.24); (iii) 0.5 M Al(p-TSA)₄; (iv) 0.5 M Al(p-TSA)₆ with pH adjusted to 1.35 with NH₄OH; and (v) 1 M AlCl₃ on a 3mm glassy carbon working electrode vs. a Ag/AgCl (3 M NaCI) reference electrode and an aluminum counter electrode and a 50 mVs⁻¹ scan rate.
FIG. 4 is cyclic voltammograms for aluminum complexes in water (i) 1 M Al(MS)₃ (pH 2.47); (ii) 3 M Al(MS)₁ (pH 3.15); and (iii) 1 M AlCl₃ on a 3 mm glassy carbon working electrode vs. a Ag/AgCl (3 M NaCI) reference electrode and an aluminum counter electrode and a 50 mVs⁻¹ scan rate.
FIG. 5 is a scanning electron microscopy (SEM)/ energy-dispersive X-ray (EDX) spectroscopy image of 20 AWG copper wire plated to a thickness in excess of 10 µm with aluminum.

### DESCRIPTION

### Introduction

Many commercially important elements from the periodic table cannot be easily electrodeposited from aqueous solutions because their reduction potentials can be much larger than the electrochemical window for water (e.g., the over-potential for the evolution of hydrogen gas due to water splitting). The various embodiments described herein provide an approach whereby the reduction potential of aluminum is "tuned" in a way that they are amendable to electrodeposition from aqueous solutions. In one embodiment, the reduction potential of the aluminum is tuned by selecting ligands that change the reduction potential of the metals such that the metal can be electrodeposited from an aqueous solution without, e.g., hydrogen gas generation. In other embodiments, the ligands are chosen in such a way that they affect the reduction potential of the metal center, thermodynamically, such that the reduction of the aluminum center occurs prior to the hydrogen evolution overpotential.

The present invention provides methods for the electrodeposition of aluminum as defined in the appended claims. Some embodiments described herein, therefore, are directed to a method for the electrodeposition of at least one metal onto a surface of a conductive substrate. According to the invention, the electrodeposition is conducted at a temperature from about 10°C to about 70°C (e.g., about 10°C to about 25°C; about 10°C to about 40°C; about 15°C to about 50°C; about 25°C to about 50°C; or about 30°C to about 50°C), about 0.5 atm to about 5 atm (e.g., about 0.5 atm to about 2 atm; 0.5 atm to about 1 atm; 1 atm to about 3 atm; 2 atm to about 5 atm or about 2 atm to about 3 atm), in an atmosphere comprising oxygen (e.g., in an atmosphere comprising about 1 to about 100% oxygen; about 5 to about 50% oxygen; about 10 to about 30% oxygen; about 15 to about 30% oxygen; about 20 to about 80% oxygen or about 25 to about 75% oxygen, the balance of the atmosphere comprising gases including nitrogen, carbon dioxide, carbon monoxide, water vapor, etc.). According to the invention, the method comprises electrodepositing the aluminummetal via electrochemical reduction of a metal complex dissolved in a substantially aqueous medium. It should be understood that the method of the various embodiments described herein can also be conducted under conditions wherein the medium also contains at least some amount of dissolved oxygen (e.g., dissolved oxygen in the water present in the medium).

### Metals

### Metal Complex

The metal complexes of the various embodiments described herein comprise an aluminum center and ligands associated with the metal center. According to the invention, at least one of the ligands associated with the metal center is an electron withdrawing ligand.

According to the present invention "aluminum centers" include a cation of aluminum (e.g., Al⁺³).

As defined herein, the term "electron withdrawing ligand" generally refers to a ligand or combination of one or more (e.g., two to three; two to six; three to six; or four to six ligands) associated with the metal center, wherein the ligand or ligands are sufficiently electron withdrawing such that the reduction potential of the metal center in the metal complex is decreased below the over-potential for the evolution of hydrogen gas due to water splitting. The term "over-potential for the evolution of hydrogen gas due to water splitting" refers, in some instances, to a potential more negative than -1.4 V versus Ag/AgCI, where one generally observes significant hydrogen generation.

In some embodiments, electron withdrawing ligands can be ligands wherein the conjugate acid of the ligand has a pKa of from about 2 to about -5 (e.g., about -1.5 to about -4; about -2 to about -3; about -2 to about -4; about -1 to about - 3; and about 2 to about -2).

According to the invention, the ligands that are useful in the methods described herein include sulfonate or sulfonimide ligands.

According to the invention the sulfonate ligand is chosen from sulfonate ligands of the formulae:

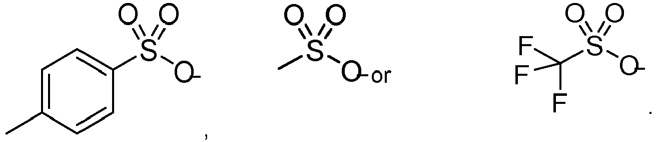

According to the invention the sulfonimide ligand is a sulfonimide ligand of the formula: 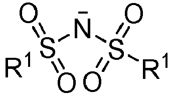 wherein each R¹ is CF₃.

Although not wishing to be bound by any specific theory, it is believed that the aluminum complex can be additionally complexed with any species present in the substantially aqueous medium that is capable of complexing with the metal center. For example, in some instances, the substantially aqueous medium is buffered with a citrate buffer. It is possible that the metal center of the metal complex can coordinate not only with electron withdrawing ligands, but also with the citrate in the buffer

### Substantially Aqueous Medium

The various embodiments of the methods described herein comprise electrodepositing aluminum via electrochemical reduction of a metal complex dissolved in a substantially aqueous medium.

In some embodiments, the substantially aqueous medium comprises an electrolyte.

In sum, it should be understood that: (i) the metal complex can be the electrolyte (e.g., have a dual function as metal complex for electrodeposition and as electrolyte); (ii) when a buffer is used, the metal complex, in combination with the buffer, can be the electrolyte; (iii) the metal complex, in combination with a non-buffering electrolyte, can be the electrolyte; or (iv) the metal complex, in combination with a non-buffering electrolyte and an additional non-buffering salt (e.g., sodium chloride and potassium chloride), can be the electrolyte.

In some embodiments the substantially aqueous medium has a pH of from about 1 to about 7 (e.g., about 2 to about 4; about 3 to about 6; about 2 to about 5; about 3 to about 7; or about 4 to about 7). In other embodiments, the substantially aqueous medium is buffered at a pH of between about 1 and about 7 (e.g., about 2 to about 4; about 3 to about 6; about 2 to about 5; about 3 to about 7; or about 4 to about 7) using an appropriate buffer

### Substrate

Embodiments described herein are directed to a method for the electrodeposition of aluminum onto a surface of a conductive substrate.

As defined herein, the term "substrate" includes any material with a resistivity of less than 1 Ωm (at 20°C). Some metallic substrates will naturally have such a resistivity. But the requisite resistivity can be achieved for non-metallic substrates by methods known in the art. For example, through doping, as is the case for semi-conductors comprising primarily of silicon; or by pretreatment of the substrate with an alternative coating technique to deposit a thin, adherent layer with a surface resistivity of less than 1 Ωm, as is the case for plastics, precoated with a metal such as copper.

Other substrates include, for example, plastics that are doped with a carbon material (e.g., carbon nanotubes and graphene) to the point where they are suitably conductive; and electron conductive polymers such as polypyrrole and polythiophene.

### Applications

In some embodiments, the methods described herein can be used to electrodeposit at least one layer (e.g., at least two) of the at least one (e.g., at least two) metal onto a surface of a substrate. In some embodiments, each layer can comprise one or more different metals. In other embodiments, when there are at least two layers that are electrodeposited, a first layer comprises different at least one metal relative to the second layer.

The electrodeposition methods described herein can therefore be used to in a variety of different applications, including: electrodes position of corrosing resistant alloys; generating biomedical coatings; generating automotive coatings; generating catalysis coatings; growing refractory material over metallic substrates (e.g., materials used in kilns, power plants, glass smelters, steel manufacturing, etc., which would have use for growing refractory materials on an aluminum oxide layer to generate a ceramic coating with a metal backing); thermal barrier coatings for, e.g., gas turbines; water infrastructure coatings, to imbue the infrastructure with, among other things, resistance to sulfates, alkaline conditions, and improved corrosion resistance towards hot water; highway and aerospace infrastructure, to imbue the infrastructure with improved corrosion against natural elements, salts, and de-icing fluids); nano-patterning and applications in electronics and lithography; generating metal alloys; improve adhesion of, e.g., paint to a surface by creating hydroxylic functionality on aluminum oxide layers; electro-coat applications where, for example sharp edges on a metal surface are first coated with a second metal and the coated metal is subsequently cationic epoxy electrocoated); creating non-adhesives substrates by co-depositing nickel-Teflon on a substrate; generating primer coatings for e-coat applications, as well as aerospace and automotive coatings; applications in galvanic corrosions, where dissimilar metals may be in contact; metal purification; optics and radiator absorbers; light to thermal conversion devices; heat exchangers; creating coatings comprising nano- or microparticles of diamond, Teflon®, carbon black, talc, where the nano- or microparticles are suspended in the substantially aqueous medium and they would be included in the plating.

In this document, the terms "a," "an," or "the" are used to include one or more than one unless the context clearly dictates otherwise. The term "or" is used to refer to a nonexclusive "or" unless otherwise indicated. In addition, it is to be understood that the phraseology or terminology employed herein, and not otherwise defined, is for the purpose of description only and not of limitation. Any use of section headings is intended to aid reading of the document and is not to be interpreted as limiting. Further, information that is relevant to a section heading may occur within or outside of that particular section.

### EXAMPLES

The examples described herein are intended solely to be illustrative, rather than predictive, and variations in the manufacturing and testing procedures can yield different results. All quantitative values in the Examples section are understood to be approximate in view of the commonly known tolerances involved in the procedures used. The foregoing detailed description and examples have been given for clarity of understanding only. No unnecessary limitations are to be understood therefrom.

### Materials

Aluminum carbonate (Al₂(CO₃)₃, Alfa Aesar); aluminum chloride (AlCl₃, anhydrous, ≥98.0%, TCI); bis(trifluoromethane)sulfonamide (Tf₂NH, ≥95.0%, Sigma-Aldrich); methanesulfonic acid (MsOH, 99%, Acros Organics); p-toluenesulphonic acid (TsOH, monohydrate, 98.5+%, Alfa Aesar); trifluoromethanesulfonic acid (TfOH, 99%, Oakwood Chemical); trifluoroacetic acid (TFA, 99%, Alfa Aesar); polyvinyl alcohol (PVA, average M_{w} 13000-23000, 98% hydrolyzed, Sigma-Aldrich); ammonium acetate (CH₃CO₂NH₄, 97%, Alfa Aesar); ammonium hydroxide solution (NH₄OH, ACS reagent, Sigma-Aldrich); and citric acid (97%, Alfa Aesar) were used without further purification.

### Example 1: Synthesis of 1 M Al(NTf₂N)₃ aqueous solution

To a mixture of Al₂(CO₃)₃ (138 g, 0.59 mol, 1 eq) in H₂O (600 mL), HTf₂N aqueous solution (6 eq., 995 g, 3.54 mol; in 300 mL H₂O) was added portionwise under magnetic stirring at room temperature. The turbid mixture foamed and became warm. After 2 h, the mixture was heated at 60°C overnight and afforded a transparent light yellow liquid. After the mixture was cooled down to room temperature, additional H₂O was added to make the total volume of the mixture 1.2 L.

### Example 2: General procedures for preparation aluminum complex aqueous solutions for cyclic voltammetry (CV) experiments

To prepare 2 mL aluminum complex aqueous solutions, a mixture of Al₂(CO₃)₃ (0.23 g, 1 mmol) and H₂O (0.5 mL) was stirred at room temperature. Organic acid (6 or 12 mmol; 3 or 6 eq. to Al, see Table 1) was added slowly into the mixture and yielded a turbid aqueous mixture. After stirring for another 1 hour, the mixture was heated to approximately 60°C overnight and give a clear liquid. After the mixture was cooled to room temperature, H₂O was added to adjust the solution to certain molarity (0.5 or 1 M, see Table 1).

**Table 1**

| Compound | Compound abbreviation | Organic acid used in synthesis | (ligand) to Al ratio | Aluminum Molarity / M | pH | Reduction onset potential / V |
|---|---|---|---|---|---|---|
| Aluminum chloride | AlCl₃ | N/A | 3:1 | 1 | 2.04 | -1.67 |
| Aluminum bis(trifluoromethane)sulfonimi de | Al(Tf₂N)₃ | Tf₂NH | 3:1 | 1 | 1.91 | -1.10 |
| | Al(Tf₂N)₁ | | 1:1 | 1 | 3.30 | -1.20 |
| Aluminum methanesulfonate | Al(MS)₃ | MsOH | 3:1 | 1 | 2.47 | -0.84 |
| | Al(MS)₆ | | 6:1 | 1 | 1.00 | -1.11 |
| | Al(MS)₁ | | 1:1 | 3 | 3.15 | -1.12 |
| Aluminum p-toluenesulphonate | Al(OTs)₃ | TsOH | 3:1 | 1 | 2.36 | -1.13 |
| | Al(OTs)₆ | | 6:1 | 0.5 | 0.24 | -0.93 |
| | Al(OTs)₆ | | 6:1 | 0.5 | 1.35 | -1.17 |
| Aluminum trifluoromethanesulfonate | Al(OTf)₆ | TfOH | 6:1 | 1 | 2.82 | -1.35 |
| Aluminum trifluoroacetate | Al(TFA)₃ | TFA | 3:1 | 0.5 | 3.17 | -1.10 |
| | Al(TFA)₆ | | 6:1 | 0.5 | 0.78 | only gas evolution |
| | Al(TFA)₆ | | 6:1 | 0.5 | 1.18 | -1.07 |
| | Al(TFA)₆ | | 6:1 | 0.5 | 3.34 | -1.32 |

**Table 2**

| Ligand | Structure | pKa in water |
|---|---|---|
| bis(trifluoromethane)sulfonamide (Tf₂N) | 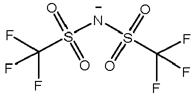 | Too negative to measure |
| p-Toluenesulfonate (p-TSA) | 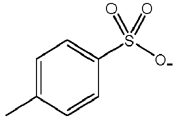 | -2.14 |
| Methanesulfonate (MSO) | 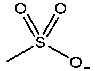 | -1.61 |
| Triflate (TfO) | 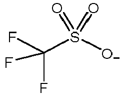 | -3.43 |
| Trifluoroacetate (TFA) | 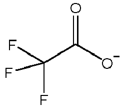 | 0.52 |

### Example 3: Hull Cell experiments

### Aluminum Plating Experiment 1

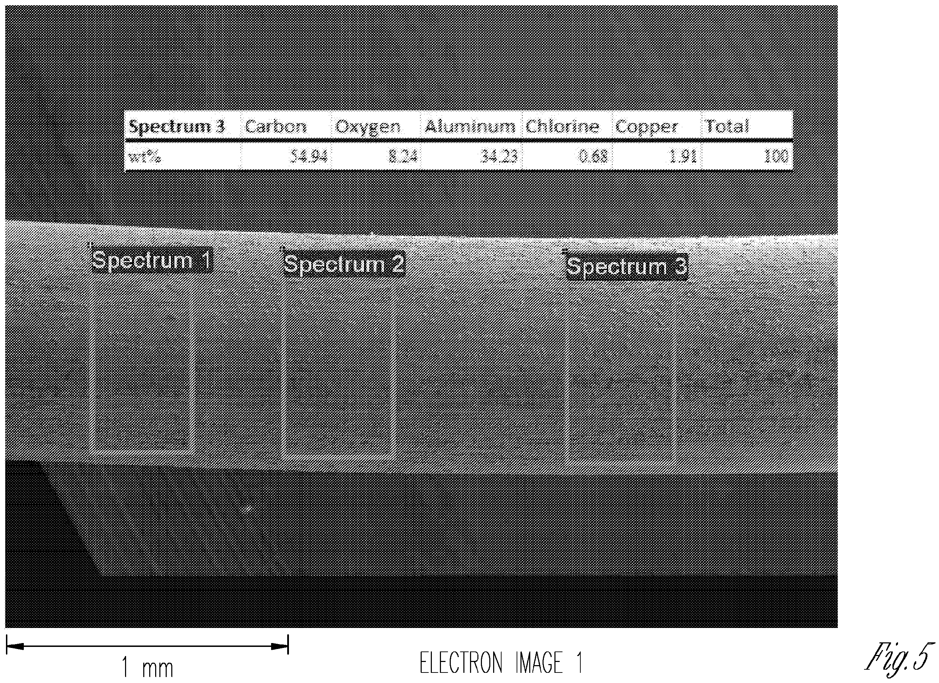

An example of the aluminum plating process used 0.3 M Al(Tf₂N)₃ in water with an additional electrolyte of 1 M ammonium acetate. An additive of 0.5 wt% PVA was added. A hull cell plating was conducted using 100 mL of the solution at 0.5 A for 30 mins giving a powdery deposit at the high current density end, no plating at the low current density end and a smooth, reflective, metallic coating between 40 A/dm² and 150 A/dm². The pH of the plating solution was buffered between 4.8 and 5.0, and a temperature of 40°C. The solution is found to contain some dark colored precipitate and a large amount of foaming, post electrolysis. A dark, metallic deposit of smooth reflective aluminum is shown by scanning electron microscopy (SEM) and energy-dispersive X-ray (EDX) spectroscopy analysis. See, e.g., FIG. 5.

### Aluminum Plating Experiment 2

An additional example of the aluminum plating process used 0.3 M Al(Tf₂N)₃ in water with an additional electrolyte of 1 M ammonium citrate which was titrated from 1M citric acid with NH₄OH. An additive of 0.5 w% PVA was added. A hull cell plating was conducted using 100 mL of the solution at 0.5 A for 30 mins giving a thicker and darker deposit at the high current density end (above 40 A/dm²), no plating at the low current density (below 40 A/dm2). The coating was thickest at the high current density end and appeared shiny and metallic. The pH of the plating solution was buffered between 2.8 and 3.2, and a temperature of 40°C. The solution is found to contain less dark colored precipitate but no foaming was seen in this case, post electrolysis. A thin, dark, metallic deposit of smooth reflective aluminum is shown by SEM and EDX analysis, with a clear deposition gradient from high to low current density.

### Example 4: Small scale electroplating of high purity aluminum from Al(OMs)/NH₄ Citrate on a curved geometry

Using a 10 mL test aliquot of 0.5 M Al(OMs) and 1 M ammonium citrate with aluminum to ligand ratio of 1:1, a 20 AWG copper wire was successfully plated to a thickness in excess of 10 µm. The procedure used a two electrode system with a copper wire (20 AWG, 6mm length) as the cathode substrate and an aluminum counter / reference electrode. Chronopotentiometry was carried out at -20 mA (-120 mA.cm⁻²) for 3 hours (FIG. 5). The temperature of the bath was controlled and maintained at 54 °C throughout.

### Example 5

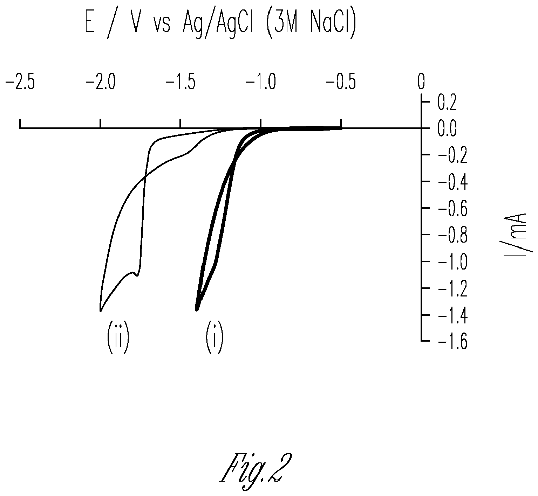

A range of aluminum salts with various ligand structures have been developed (see Table 2). The ligands are generally considered as mono-dentate, with the exception of Tf₂N which is more likely a bidentate ligand. Each ligand is considered as electron withdrawing in nature to varying degrees. While not being bound by any specific theory, it is believed that this electron withdrawing character is likely to shift the reduction potential of aluminum (or any other metal described herein) with the most strongly electron withdrawing substituents leading to a shift towards less negative potentials. FIG. 2 shows the comparative electron withdrawing character of each substituent as estimated from the pKa of the acid. Generally speaking, stronger acids are more able to stabilize the deprotonated form of the acid leading to lower pKas.

In order to test the effect of various electron withdrawing substituents on the standard reduction potential of aluminum complexes a series of cyclic voltammetry experiments were carried out. Each salt was synthesized *in situ* by combination of various acids with aluminum carbonate in water to make a 1 M solution of each salt. In order to limit ligand substitution and complexation, no other electrolyte was added into the solution. Each cyclic voltammogram was collected vs. Ag/AgCl (3 M NaCI) and used an aluminum counter electrode. The working electrode was chosen as glassy carbon to limit the hydrogen evolution reaction which would ordinarily obscure the aluminum reduction for some salts.

As a control case 1 M AlCl₃ was used to gauge the effectiveness of the electron withdrawing substituents. It was expected that for aluminum chloride it is likely that the electroactive species is of an aqueous aluminum hydroxide complex (Al[H₂O]₅OH), which forms rapidly upon AlCl₃ exposure to excess water. This aluminum complex was initially compared to Al(Tf₂N)₃ (FIG. 2) and it was found that the electron withdrawing Tf₂N ligands had a significant effect on the cathodic reduction process. The onset potential was shifted from about -1.65 V to about -1.1 V. While not being bound by any particular theory, it is believed that this shift in reduction potential shows that the aluminum species may be in a different form from the AlCl₃ case and does not simply become a water hydroxide complex. This might suggest that the ligand structure might be substantially retained in water and remains stable in solution for months. This development in aqueous aluminum complexation and comparative ease of electroreduction allows for greater competition of aluminum reduction with hydronium reduction on metal substrates, thus opening an aqueous aluminum plating procedure. Further evidence that aluminum electroplating is possible in this system comes from the presence of a nucleation loop in a reverse scan. This suggests a nucleation event occurs on the cathodic wave, likely the surface adsorption of a reduced aluminum species.

Additional salts (see Table 2) have been tested in a similar procedure with some salts showing similar promise for aluminum reduction. Other ligands were tested in a 1:1, 1:3 and 1:6 ratio of aluminum to ligand to test the effect of a 6 coordinate complex vs. a 1 or 3 coordinate complex. In the case of a hexa-coordinate aluminum species, an additional effect was that excess acid caused the pH to be reduced significantly.

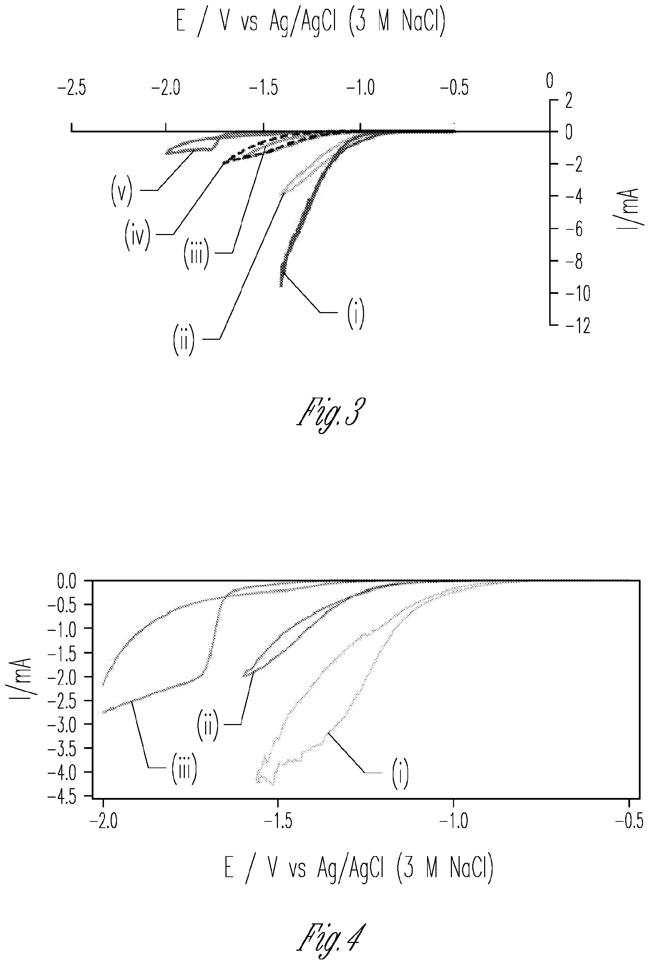

When p-TSA is used as the ligand in both a 1:4 and 1:6 ratio with Al³⁺ a systematic shift is seen towards more positive reduction potentials. As the solution becomes more acidic, it would be expected that hydronium reduction would become more prevalent at more positive potentials. In the case of 6 M unbound p-TSA (FIG. 3 scan (i)) a solvent reduction wave is visualized with a low onset and no mass transport limiting peak. When the same amount of p-TSA is used in a 1:6 molar ratio with aluminum a similar onset is seen (FIG. 3 scan (ii)) but now a peak emerges which, when compared with Al(Tf₂N)₃ may be attributed to an Al³⁺ reduction event from a p-TSA rich complex. In a 1:4 ratio with aluminum (FIG. 3 scan (iii)), a more negative onset and peak is seen as well as larger resistance. This discrepancy may be explained in part by pH shift since it would be expected that the excess acid would lead to a dramatic reduction in solution pH. Indeed, the pH of the 1:6 solution is about 0.24 and may explain the early onset of hydronium reduction. When the pH of this solution was adjusted by addition of ammonium hydroxide to pH 1.35 the redox behavior is identical to that of the 1:4 solution (FIG. 3, scans (iii) and (iv)). This behavior shows that the redox process is the same in both cases and that the aluminum coordination is likely by 1-4 p-TSA, is stable in acidic media and has a lower reduction potential than Al(H₂O)OH²⁺.

Methanesulfonate (MS) is a comparable ligand to p-TSA, showing highly electron withdrawing character but is sterically much smaller, which may be expected to facilitate a hexa-coordinate aluminum species. It is found that both the 1:1 and 6:1 ligand to aluminum ratio cases have very similar onsets for alunminum reduction of ca. -1.1V. However the 3:1 case shows an onset of only -0.84 V. This suggests that a maximized effect for electron withdrawing ligands is found for this ratio with lower coordination (1:1) being very similar in onset to other tested ligands and 6:1 having an excess of acid and ligands. The 3:1 case also has a pH of only 2.47 suggesting that a lot of the expected free protons are lost upon reaction with the carbonate and the ligands are likely coordinated rather than the aluminum complex leading to a high hydronium ion concentration.

Triflate (TfO) showed very little evidence of ligation to aluminum with a 6:1 ratio of acid showing a highly acidic environment with a pH of 0. This suggests that the majority of the acid remains free and is not involved in the anticipated carbonate displacement reaction and leads to almost no aluminum ligation. This hypothesis is corroborated by the relatively negative reduction potential compared to other ligands of -1.35 V.

The final ligand Trifluoroacetate (TFA) was different from the others by way of a coordinating acetate anion rather than a sulfonate. For the case of a 1:3 complex for aluminum to TFA, a similar character was seen to that of both p-TSA and TfO with an onset potential of ca -1.10 V and a resistive peak being found, suggesting very few charge carriers being available. With a 1:6 ratio of aluminum to TFA a much lower onset potential was found although it is highly likely that the majority of this process was proton reduction with no clear aluminum onset being detectable. When the pH was adjusted for the 1:6 solution to make it most similar to that of the 1:3 a much higher onset potential was found. This suggests a different reductive aluminum species as compared to the 1:3 case, although the reduction was also not similar in character to that of Al(H₂O)₅OH and thus it must be determined that TFA is able to at least partially coordinate to the aluminum center and affect its electronegativity.

In summary, Al(MS)₃ shows the lowest recorded potential for Al³⁺ reduction below that for hydronium reduction with an onset of about -0.84 V and a peak at about -1.3 V. See, e.g., FIG. 4. Hydrogen generation is obvious at the higher limit of this voltage range but an appreciable current for aluminum reduction is established prior to the evolution of gas. Other ligands p-TSA and Tf₂N show a comparable lowered reduction potential although slightly more negative than MS. It is unclear what the coordination for the p-TSA ligand is to aluminum, and is likely to be able to coordinate at least three p-TSA ligands. This coordination is sufficient to substantially lower the reduction potential of Al³⁺ and is visible proceeding hydronium reduction at pHs as low as 1.35. TfO however, seems to be unstable in the presence of NH₄⁺ and is likely not strongly coordinating, with a redox process most similar to that of the water hydrated aluminum species. TFA appears to be an intermediate case whereby a lower coordination number may be possible in conjunction with some hydration. A slightly improved reduction potential is recorded, although not sufficient to compete with either Tf₂N or p-TSA.

It will be apparent to those skilled in the art that the specific structures, features, details, configurations, etc., that are disclosed herein are simply examples that can be modified and/or combined in numerous embodiments. All such variations and combinations are contemplated by the inventor as being within the bounds of this disclosure.

## Claims

1. A method for the electrodeposition of aluminum onto a surface of a conductive substrate at a temperature from about 10°C to about 70°C, about 0.5 atm (50.66 kPa) to about 5 atm (506.62 kPa), in an atmosphere comprising oxygen, the method comprising electrodepositing aluminum via electrochemical reduction of an aqueous solution consisting of water, and an aluminum complex, optionally in the presence of a) an electrolyte selected from ammonium acetate or ammonium citrate, or b) polyvinyl alcohol (PVA) or a mixture thereof, the aluminum complex consisting of an aluminum center and ligands;
wherein the ligands are at least one of sulfonate ligands and sulfonimide ligands, wherein the at least one sulfonate ligand is selected from sulfonate ligands of the formulae: 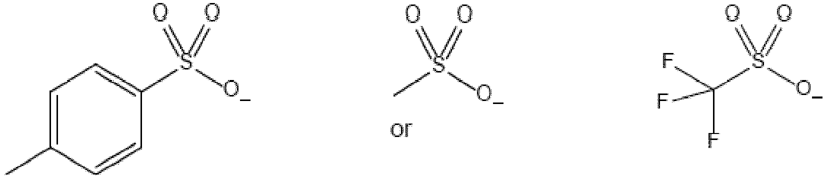 and
wherein the at least one sulfonimide ligand is selected from sulfonimide ligands of the formula:

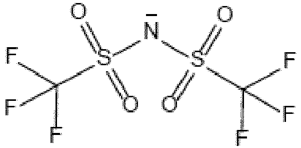

2. The method according to claim 1, wherein the aqueous solution consists of water and the aluminum complex.

3. The method of claim 1 or 2, wherein the pH of the aqueous solution is buffered at a pH from 1 to 7.

4. The method of any one of claims 1-3, wherein the electrodepositing comprises electrodepositing at least one layer of aluminum onto the surface of the substrate.

5. The method of claim 4, wherein the electrodepositing comprises electrodepositing at least two layers of aluminum onto the surface of the substrate.

## Patentansprüche

1. Ein Verfahren zur elektrochemischen Abscheidung von Aluminium auf eine Oberfläche eines leitfähigen Substrats bei einer Temperatur von etwa 10 °C bis etwa 70 °C, etwa 0,5 atm (50,66 kPa) bis etwa 5 atm (506,62 kPa), in einer Atmosphäre, die Sauerstoff beinhaltet, wobei das Verfahren das elektrochemische Abscheiden von Aluminium durch elektrochemische Reduktion einer aus Wasser und einem Aluminiumkomplex bestehenden wässrigen Lösung, optional in Gegenwart von a) einem Elektrolyten, der aus Ammoniumacetat oder Ammoniumcitrat ausgewählt ist, oder b) Polyvinylalkohol (PVA) oder einer Mischung davon, wobei der Aluminiumkomplex aus einem Aluminiumkern und Liganden besteht, beinhaltet;
wobei die Liganden mindestens eines von Sulfonatliganden und Sulfonimidliganden sind, wobei der mindestens eine Sulfonatligand aus Sulfonatliganden der folgenden Formel ausgewählt ist: 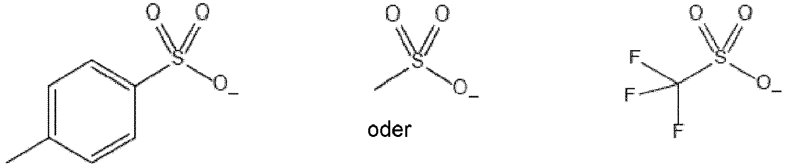 und
wobei der mindestens eine Sulfonimidligand aus Sulfonimidliganden der folgenden Formel ausgewählt ist:

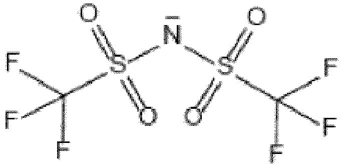

2. Verfahren gemäß Anspruch 1, wobei die wässrige Lösung aus Wasser und dem Aluminiumkomplex besteht.

3. Verfahren gemäß Anspruch 1 oder 2, wobei der pH-Wert der wässrigen Lösung bei einem pH-Wert von 1 bis 7 gepuffert wird.

4. Verfahren gemäß einem der Ansprüche 1-3, wobei das elektrochemische Abscheiden das elektrochemische Abscheiden von mindestens einer Aluminiumschicht auf die Oberfläche des Substrats beinhaltet.

5. Verfahren gemäß Anspruch 4, wobei das elektrochemische Abscheiden das elektrochemische Abscheiden von mindestens zwei Aluminiumschichten auf die Oberfläche des Substrats beinhaltet.

## Revendications

1. Un procédé pour l'électrodéposition d'aluminium sur une surface d'un substrat conducteur à une température allant d'environ 10 °C à environ 70 °C, d'environ 0,5 atm (50,66 kPa) à environ 5 atm (506,62 kPa), dans une atmosphère comprenant de l'oxygène, le procédé comprenant l'électrodéposition d'aluminium par réduction électrochimique d'une solution aqueuse constituée d'eau, et d'un complexe d'aluminium, facultativement en présence a) d'un électrolyte sélectionné parmi l'acétate d'ammonium ou le citrate d'ammonium, ou b) d'alcool polyvinylique (PVA) ou d'un mélange de ceux-ci, le complexe d'aluminium étant constitué d'un centre aluminium et de ligands ;
dans lequel les ligands sont au moins un ligand parmi des ligands sulfonate et des ligands sulfonimide, dans lequel l'au moins un ligand sulfonate est sélectionné parmi des ligands sulfonate des formules : 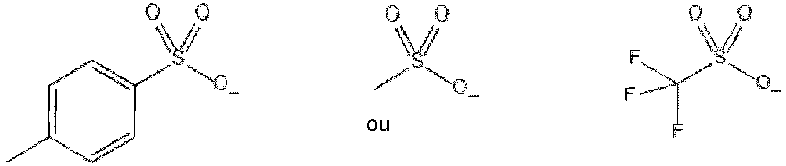 et
dans lequel l'au moins un ligand sulfonimide est sélectionné parmi des ligands sulfonimide de la formule :

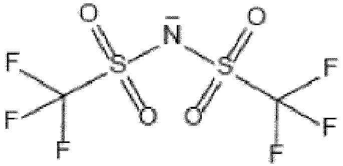

2. Le procédé selon la revendication 1, dans lequel la solution aqueuse est constituée d'eau et du complexe d'aluminium.

3. Le procédé de la revendication 1 ou de la revendication 2, dans lequel le pH de la solution aqueuse est tamponné à un pH allant de 1 à 7.

4. Le procédé de n'importe laquelle des revendications 1 à 3, dans lequel l'électrodéposition comprend l'électrodéposition d'au moins une couche d'aluminium sur la surface du substrat.

5. Le procédé de la revendication 4, dans lequel l'électrodéposition comprend l'électrodéposition d'au moins deux couches d'aluminium sur la surface du substrat.
